# EUROPEAN PATENT APPLICATION

(11) **EP 4 418 720 A1**
(43) Date of publication of application: **21.08.2024**
(21) Application number: 23219720.2
(22) Date of filing: 22.12.2023
(51) Int. Cl.: H04W 24/04, H04W 74/0833

(54) **FAILURE REPORTING IN SMALL DATA TRANSMISSION**

(30) Priority: 15.02.2023 FI 20235161
(71) Applicant: Nokia Technologies Oy, 02610 Espoo (FI)
(72) Inventor: KOSKINEN, Jussi-Pekka, Oulu (FI); TURTINEN, Samuli Heikki, Ii (FI)
(74) Representative: Nokia EPO representatives

(57) **Abstract**

Various example embodiments relate to transmission failure reporting in a communication network An apparatus may comprise: means for receiving, from an access node of a communication network, a configuration for a small data transmission procedure; means for detecting an occurrence of a failure associated with the small data transmission procedure; and means for transmitting, to the access node, a failure report comprising information including at least one of the following: a reason for the failure, information relating to the configuration for the small data transmission procedure used during the occurrence of the failure, or information relating to a random access procedure used during the occurrence of the failure.

## Description

### TECHNICAL FIELD

Various example embodiments generally relate to the field of wireless communications. Some example embodiments relate to failure reporting of small data transmission failure information.

### BACKGROUND

Various wireless communication systems, for example 3GPP (3^{rd} Generation Partnership Project) 5G New Radio (NR), may be configured with minimization of drive tests (MDT) functionality both for radio standards and operations and management (O&M) standards. This makes it possible to replace part of manual network testing by utilizing MDT capable commercial UEs configured to report appropriate measurement results in order to allow the network to collect the results and then analyse them to identify possible problems in the network.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Example embodiments of the present disclosure improve reporting of transmission failures, for example in connection with small data transmission in 3GPP networks.

According to a first aspect, an apparatus is disclosed. The apparatus may comprise: means for receiving, from an access node of a communication network, a configuration for a small data transmission procedure; means for detecting an occurrence of a failure associated with the small data transmission procedure; and means for transmitting, to the access node, a failure report comprising information including at least one of the following: a reason for the failure, information relating to the configuration for the small data transmission procedure used during the occurrence of the failure, or information relating to a random access procedure used during the occurrence of the failure.

According to an example embodiment of the first aspect, the means for detecting the occurrence of the failure is configured to determine the occurrence of the failure when a cell re-selection procedure is initiated during the small data transmission procedure, a failure detection timer associated with the small data transmission procedure expires, a medium access control entity reaches a configured maximum number of random access preamble transmissions, or a radio link control entity reaches a configured maximum number of retransmissions.

According to an example embodiment of the first aspect, the reason for the failure comprises at least one of the following: initiation of the cell re-selection procedure during the small data transmission procedure, expiry of the failure detection timer associated with the small data transmission procedure, the medium access control entity reaching the configured maximum number of random access preamble transmissions, or the radio link control entity reaching the configured maximum number of retransmissions.

According to an example embodiment of the first aspect, the configuration for the small data transmission procedure further includes a request or a configuration for collecting or logging the information for the failure report.

According to an example embodiment of the first aspect, the apparatus further comprises: means for receiving, from the access node, a request for the failure report.

According to an example embodiment of the first aspect, the apparatus further comprises: means for collecting or logging the information for the failure report associated with the occurrence of the failure.

According to an example embodiment of the first aspect, the apparatus further comprises: means for logging and transmitting, to the access node, an indication of a purpose for random access, an identifier of a cell associated with the small data transmission procedure, at least part of the configuration of the small data transmission procedure, or at least part of a random access configuration applicable for the small data transmission procedure.

According to an example embodiment of the first aspect, the at least part of the configuration of the small data transmission procedure comprises at least one of the following: a reference signal received power threshold, a data volume threshold, a value of a logical channel scheduling request delay timer, a value of the failure detection timer, or a search space for monitoring a physical downlink control channel.

According to an example embodiment of the first aspect, the information relating to the random access procedure used during the occurrence of the failure of the small data transmission procedure comprise at least one of the following: an indication that the occurrence of the failure occurred during a two-step random access procedure, or an indication that the occurrence of the failure during a four-step random-access procedure.

According to an example embodiment of the first aspect, the failure report comprises a random access report.

According to an example embodiment of the first aspect, the random access report comprises small data transmission data and/or the configuration for the small data transmission procedure.

According to an example embodiment of the first aspect, the apparatus further comprises: means for transmitting, to the access node, an indication of availability of the random access report or the failure report.

According to an example embodiment of the first aspect, the apparatus further comprises: means for transmitting the random access report to the access node, in response to receiving a request for the random access report from the access node.

According to an example embodiment of the first aspect, the apparatus further comprises: means for transmitting small data transmission failure information to the access node, in response to receiving a request for the small data transmission failure information from the access node.

According to an example embodiment of the first aspect, the random access report comprises a user equipment information response radio resource control message, or the request for the random access report comprises a user equipment information request radio resource control message.

According to an example embodiment of the first aspect, the failure report is configured to be delivered to a network analysis function of the communication network for determining a cause for the failure.

According to a second aspect, a method is disclosed. The method may comprise: receiving, from an access node of a communication network, a configuration for a small data transmission procedure; detecting an occurrence of a failure associated with the small data transmission procedure; and transmitting, to the access node, a failure report comprising information including at least one of the following: a reason for the failure, information relating to the configuration for the small data transmission procedure used during the occurrence of the failure, or information relating to a random access procedure used during the occurrence of the failure.

According to an example embodiment of the second aspect, the method comprises: determining the occurrence of the failure when a cell re-selection procedure is initiated during the small data transmission procedure, a failure detection timer associated with the small data transmission procedure expires, a medium access control entity reaches a configured maximum number of random access preamble transmissions, or a radio link control entity reaches a configured maximum number of retransmissions.

According to an example embodiment of the second aspect, the reason for the failure comprises at least one of the following: initiation of the cell re-selection procedure during the small data transmission procedure, expiry of the failure detection timer associated with the small data transmission procedure, the medium access control entity reaching the configured maximum number of random access preamble transmissions, or the radio link control entity reaching the configured maximum number of retransmissions.

According to an example embodiment of the second aspect, the configuration for the small data transmission procedure further includes a request or a configuration for collecting or logging the information for the failure report.

According to an example embodiment of the second aspect, the method further comprises: receiving, from the access node, a request for the failure report.

According to an example embodiment of the second aspect, the method further comprises: collecting or logging the information for the failure report associated with the occurrence of the failure.

According to an example embodiment of the second aspect, the method further comprises: logging and transmitting, to the access node, an indication of a purpose for random access, an identifier of a cell associated with the small data transmission procedure, at least part of the configuration of the small data transmission procedure, or at least part of a random access configuration applicable for the small data transmission procedure.

According to an example embodiment of the second aspect, the at least part of the configuration of the small data transmission procedure comprises at least one of the following: a reference signal received power threshold, a data volume threshold, a value of a logical channel scheduling request delay timer, a value of the failure detection timer, or a search space for monitoring a physical downlink control channel.

According to an example embodiment of the second aspect, the information relating to the random access procedure used during the occurrence of the failure comprise at least one of the following: an indication that the occurrence of the failure occurred during a two-step random access procedure, or an indication that the occurrence of the failure during a four-step random-access procedure.

According to an example embodiment of the second aspect, the failure report comprises a random access report.

According to an example embodiment of the second aspect, the random access report comprises small data transmission data and/or the configuration for the small data transmission procedure.

According to an example embodiment of the second aspect, the method further comprises: transmitting, to the access node, an indication of availability of the random access report or the failure report.

According to an example embodiment of the second aspect, the method further comprises: transmitting the random access report to the access node, in response to receiving a request for the random access report from the access node.

According to an example embodiment of the second aspect, the random access report comprises a user equipment information response radio resource control message, or the request for the random access report comprises a user equipment information request radio resource control message.

According to an example embodiment of the second aspect, the failure report is configured to be delivered to a network analysis function of the communication network for determining a cause for the failure.

According to a third aspect a (non-transitory) computer program, a (non-transitory) computer program product, or a (non-transitory) computer-readable medium may comprise instructions for causing an apparatus to perform at least the following: receiving, from an access node of a communication network, a configuration for a small data transmission procedure; detecting an occurrence of a failure associated with the small data transmission procedure; and transmitting, to the access node, a failure report comprising information including at least one of the following: a reason for the failure, information relating to the configuration for the small data transmission procedure used during the occurrence of the failure, or information relating to a random access procedure used during the occurrence of the failure. The instructions may be further configured to cause the apparatus to perform any example embodiment of the method of the second aspect.

According to a fourth aspect an apparatus may comprise at least one processor; and at least one memory storing instructions that, when executed by the at least one processor, cause the apparatus at least to: receive, from an access node of a communication network, a configuration for a small data transmission procedure; detect an occurrence of a failure associated with the small data transmission procedure; and transmit, to the access node, a failure report comprising information including at least one of the following: a reason for the failure, information relating to the configuration for the small data transmission procedure used during the occurrence of the failure, or information relating to a random access procedure used during the occurrence of the failure. The instructions may be configured to, when executed by the at least one processor, to cause the apparatus to perform any example embodiment of the method of the second aspect. According to a fifth aspect, an apparatus is disclosed. The apparatus may comprise: means for transmitting a configuration for a small data transmission procedure to a device, wherein the configuration for the small data transmission procedure includes a request or a configuration for collecting or logging information for an occurrence of a failure associated with the small data transmission procedure.

According to an example embodiment of the fifth aspect, the apparatus further comprises: means for transmitting, to the device, a request for a failure report associated with the small data transmission procedure.

According to an example embodiment of the fifth aspect, the apparatus further comprises: means for transmitting the request for the failure report, in response to receiving an indication of availability of the failure report from the device.

According to an example embodiment of the fifth aspect, the apparatus further comprises: means for receiving the failure report from the device, wherein the failure report comprises a reason for the failure.

According to an example embodiment of the fifth aspect, the reason for the failure comprises at least one of the following: initiation of a cell re-selection procedure at the device during the small data transmission procedure, expiry of the failure detection timer of the device associated with the small data transmission procedure, a medium access control entity of the device reaching a configured maximum number of random access preamble transmissions, or a radio link control entity of the device reaching a configured maximum number of retransmissions.

According to an example embodiment of the fifth aspect, the apparatus further comprises: means for transmitting the information for the occurrence of the failure associated with the small data transmission procedure to a network analysis function of the communication network for determining a cause for the failure.

According to an example embodiment of the fifth aspect, the apparatus further comprises: means for receiving, from the device, an indication of a purpose for random access, an identifier of a cell associated with the small data transmission procedure, at least part of the configuration of the small data transmission procedure, or at least part of a random access configuration applicable for the small data transmission procedure.

According to an example embodiment of the fifth aspect, the at least part of the configuration of the small data transmission procedure comprises at least one of the following: a reference signal received power threshold, a data volume threshold, a value of a logical channel scheduling request delay timer, a value of the failure detection timer, or a search space for monitoring a physical downlink control channel.

According to an example embodiment of the fifth aspect, the apparatus further comprises: means for receiving, from the device, information relating to a random access procedure used during the occurrence of the failure.

According to an example embodiment of the fifth aspect, the information relating to the random access procedure used during the occurrence of the failure comprises at least one of the following: an indication that the occurrence of the failure occurred during a two-step random access procedure, or an indication that the occurrence of the failure during a four-step random-access procedure.

According to an example embodiment of the fifth aspect, the failure report comprises a random access report.

According to an example embodiment of the fifth aspect, the random access report comprises small data transmission data and/or the configuration for the small data transmission procedure.

According to an example embodiment of the fifth aspect, the random access report comprises a user equipment information response radio resource control message, or the request for the random access report comprises a user equipment information request radio resource control message.

According to an example embodiment of the fifth aspect, the small data transmission procedure comprises 3GPP small data transmission (SDT) procedure.

According to a sixth aspect, a method is disclosed. The method may comprise: transmitting a configuration for a small data transmission procedure to a device, wherein the configuration for the small data transmission procedure includes a request or a configuration for collecting or logging information for an occurrence of a failure associated with the small data transmission procedure.

According to an example embodiment of the sixth aspect, the method further comprises: transmitting, to the device, a request for a failure report associated with the small data transmission procedure.

According to an example embodiment of the sixth aspect, the method further comprises: transmitting the request for the failure report, in response to receiving an indication of availability of the failure report from the device.

According to an example embodiment of the sixth aspect, the method further comprises: receiving the failure report from the device, wherein the failure report comprises a reason for the failure.

According to an example embodiment of the sixth aspect, the reason for the failure comprises at least one of the following: initiation of a cell re-selection procedure at the device during the small data transmission procedure, expiry of the failure detection timer of the device associated with the small data transmission procedure, a medium access control entity of the device reaching a configured maximum number of random access preamble transmissions, or a radio link control entity of the device reaching a configured maximum number of retransmissions.

According to an example embodiment of the sixth aspect, the method further comprises: transmitting the information for the occurrence of the failure associated with the small data transmission procedure to a network analysis function of the communication network for determining a cause for the failure.

According to an example embodiment of the sixth aspect, the method further comprises: receiving, from the device, an indication of a purpose for random access, an identifier of a cell associated with the small data transmission procedure, at least part of the configuration of the small data transmission procedure, or at least part of a random access configuration applicable for the small data transmission procedure.

According to an example embodiment of the sixth aspect, the at least part of the configuration of the small data transmission procedure comprises at least one of the following: a reference signal received power threshold, a data volume threshold, a value of a logical channel scheduling request delay timer, a value of the failure detection timer, or a search space for monitoring a physical downlink control channel.

According to an example embodiment of the sixth aspect, the method further comprises: receiving, from the device, information relating to a random access procedure used during the occurrence of the failure.

According to an example embodiment of the sixth aspect, the information relating to the random access procedure used during the occurrence of the failure comprises at least one of the following: an indication that the occurrence of the failure occurred during a two-step random access procedure, or an indication that the occurrence of the failure during a four-step random-access procedure.

According to an example embodiment of the sixth aspect, the failure report comprises a random access report.

According to an example embodiment of the sixth aspect, the random access report comprises small data transmission data and/or the configuration for the small data transmission procedure.

According to an example embodiment of the sixth aspect, the random access report comprises a user equipment information response radio resource control message, or the request for the random access report comprises a user equipment information request radio resource control message.

According to an example embodiment of the sixth aspect, the small data transmission procedure comprises 3GPP small data transmission (SDT) procedure.

According to a third aspect a (non-transitory) computer program, a (non-transitory) computer program product, or a (non-transitory) computer-readable medium may comprise instructions for causing an apparatus to perform at least the following: transmitting a configuration for a small data transmission procedure to a device, wherein the configuration for the small data transmission procedure includes a request or a configuration for collecting or logging information for an occurrence of a failure associated with the small data transmission procedure. The instructions may be further configured to cause the apparatus to perform any example embodiment of the method of the sixth aspect.

According to a fourth aspect an apparatus may comprise at least one processor; and at least one memory storing instructions that, when executed by the at least one processor, cause the apparatus at least to: transmit a configuration for a small data transmission procedure to a device, wherein the configuration for the small data transmission procedure includes a request or a configuration for collecting or logging information for an occurrence of a failure associated with the small data transmission procedure. The instructions may be configured to, when executed by the at least one processor, to cause the apparatus to perform any example embodiment of the method of the sixth aspect.

Any example embodiment may be combined with one or more other example embodiments. Many of the attendant features will be more readily appreciated as they become better understood by reference to the following detailed description considered in connection with the accompanying drawings.

### BRIEF DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a communication network;
FIG. 2 illustrates an example of a four-step random access procedure;
FIG. 3 illustrates an example of a two-step random access procedure;
FIG. 4 illustrates example of detecting and reporting a small data transmission (SDT) failure;
FIG. 5 illustrates example of configuring and providing a random access (RA) report;
FIG. 6 illustrates an example of an apparatus configured to practice one or more example embodiments;
FIG. 7 illustrates example of a method for reporting a transmission failure; and
FIG. 8 an example of a method for configuring failure reporting.

Like references are used to designate like parts in the accompanying drawings.

### DETAILED DESCRIPTION

Reference will now be made to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Wireless communication systems may be configured with minimization of drive tests (MDT) functionality to enable replacement of at least part of manual network testing. Use cases of MDT include coverage optimization and quality-of-service (QoS) verification.

The following reporting modes may be specified for MDT: 1) immediate MDT for connected state UEs and 2) logged MDT for idle state UEs. The former may be similar to radio resource management (RRM) reporting except for possible provisioning of the UE location information whenever that is available. Examples of such reporting include periodical and "A2" reporting events.

In addition to MDT, there may be self organizing/optimizing network (SON) functions running in the network, trying to adapt the communication network parameters (system parameters) in order to achieve more optimized behaviour and performance. SON may also rely on LTE reports. For example, radio link failure (RLF) reporting may be used for mobility robustness optimization (MRO) by analysing the cause of the failure with the help of RLF information coming from UEs. A difference between MDT and SON is that MDT may collect information on a centralized node (e.g., a trace collection entity, TCE) for off-line processing, whereas SON may be configured to detect the problems and make appropriate actions in substantially real-time by adjusting the system parameters, e.g., with MRO the mobility (handover or cell re-selection) parameter(s). SON may be a connected state feature from LTE perspective, while MDT may be active both in idle and connected states. Similarly to MDT, the smart phone operation and mode can affect the data provided by the UE and thus the success of the adaptation to reach optimum performance. If, for example, a smart phone is indicating preference for power optimization, the reported results can be influenced due to difference of the measurement activity compared to the 'normal' mode. Hence, there could be a risk that the MDT data post-processing and SON adaptation get non-ideal information leading to erroneous decisions about suitable optimization/adaptation of the parameters.

Example embodiments of the present disclosure improve reporting associated with small data transmission (SDT), where LTEs are enabled to transmit data without unnecessarily consuming power for establishing or maintaining a radio resource control (RRC) connection to the network.

SDT information may be used for MDT, for example to avoid performing manual drive tests SDT functionality verification. In order to reduce or replace (part of the) manual network testing, utilizing MDT capable (commercial) UEs by configuring them to report appropriate SDT information on SDT failures enables the network to first collect the results and then analyse them to identify possible problems in the network or a need for optimization of the SDT operation.

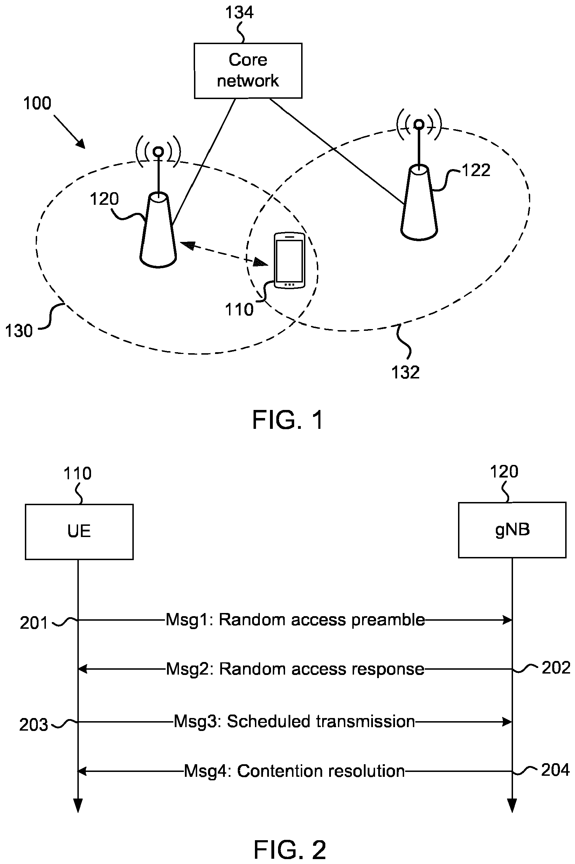

FIG. 1 illustrates an example of a communication network. Communication network 100 may comprise one or more devices, which may be also referred to as client nodes, user nodes, or user equipment (UE). An example of a device is UE 110, which may communicate with one or more access nodes or access points, represented in this example by a 5^{th} generation access nodes (gNB), over wireless radio channel(s). Communications between UE 110 and gNBs 120, 122 may be bidirectional and hence any of these entities may be configured to operate as a transmitter and/or a receiver.

An access node may be associated with a cell, which may correspond to a geographical area covered by the access node. For example, source gNB 120 may provide communication services to UE 110 within (source) cell 130. Transmissions from a device to an access node, e.g., from LTE 110 to gNB 120 may be referred to as uplink transmissions. Transmissions from an access node to a device may be referred to as downlink transmissions. In context of handover or cell-reselection, an access node of a source cell (e.g., cell 130) may be called a source access node, a source access point, or a source network node. An access node of a target cell (e.g., cell 132) may be called a target access node, a target access point, or a target network node. In various examples of the present disclosure, these network nodes are represented by (source) gNB 120 and (target) gNB 122, respectively.

Communication network 100 may further comprise a core network 134 comprising one or more core network elements, for example network nodes, network devices, or network functions. Core network 134 may for example comprise an access and mobility management function (AMF) and/or user plane function (UPF), which enable gNBs 120, 122 to provide various communication services for UE 110. The gNB 120 may be configured to communicate with the core network elements over a communication interface, such as for example a control plane interface and/or a user plane interface (e.g. NG-C/U). Access nodes, such as gNBs 120, 122, may be also called base stations or a radio access network (RAN) nodes and they may be part of a RAN between core network 134 and LTE 110. Functionality of an access node may be distributed between a central unit (CU), for example a gNB-CU, and one or more distributed units (DU), for example gNB-DUs. This scenario may be referred to as a disaggregated network architecture. It is therefore appreciated that access node functionality described herein may be implemented at a gNB, or divided between a gNB-CU and a gNB. Network elements such gNB, gNB-CU, and gNB-DU may be generally referred to as network nodes or network devices. Although depicted as a single device, a network node may not be a stand-alone device, but for example a distributed computing system coupled to a remote radio head. For example, a cloud radio access network (cRAN) may be applied to split control of wireless functions to optimize performance and cost.

Communication network 100 may be configured for example in accordance with the 5^{th} generation (5G) digital cellular communication network, as defined by the 3rd Generation Partnership Project (3GPP). In one example, communication network 100 may operate according to 3GPP 5G NR (New Radio). It is however appreciated that example embodiments presented herein are not limited to this example network and may be applied in any present or future wireless or wired communication networks, or combinations thereof, for example other type of cellular networks, short-range wireless networks, broadcast or multicast networks, or the like.

Data communication in communication network 100 may be based on a protocol stack comprising various communication protocols and layers. Layers of the protocol stack may be configured to provide certain functionalities, for example based on the Open Systems Interconnection (OSI) model or a layer model of a particular standard, such as for example NR.

In one example, the protocol stack may comprise a service data adaptation protocol (SDAP) layer, which may, at the transmitter side, receive data from an application layer for transmission, for example one or more data packets. The SDAP layer may be configured to exchange data with a PDCP (packet data convergence protocol) layer. The PDCP layer may be responsible of generation of PDCP data packets, for example based on data obtained from the SDAP layer.

A radio resource control (RRC) layer, provided for example on top of the PDCP layer, may be configured to implement control plane functionality. RRC may refer to provision of radio resource related control data. RRC messages may be transmitted on various logical control channels such as for example a common control channel (CCCH) or a dedicated control channel (DCCH).

The PDCP layer may provide data to one or more instances of a radio link control (RLC) layer. For example, the PDCP data packets may be transmitted on one or more RLC transmission legs. RLC instance(s) may be associated with corresponding medium access control (MAC) instances of the MAC layer. The MAC layer may deliver the data to the physical layer for transmission.

The MAC layer may provide a mapping between logical channels of the upper layer(s) and transport channels, such as for example broadcast channel (BCH), paging channel (PCH), downlink shared channel (DL-SCH), uplink shared channel (UL-SCH), or random access channel (RACH). The MAC layer may be further configured to handle multiplexing and demultiplexing of MAC service data units (SDU). Furthermore, the MAC layer may provide error correction functionality based on packet retransmissions, for example according to the hybrid automatic repeat request (HARQ) process. The MAC layer may also carry control information, for example in MAC control elements (CE). This enables fast exchange of control information at the MAC layer without involving the upper layers.

The physical layer may provide data transmission services on physical layer channels such as for example the physical broadcast channel (PBCH), physical downlink control channel (PDCCH), physical downlink shared channel (PDSCH), physical uplink control channel (PUCCH), physical uplink shared channel (PUSCH), or physical random access channel (PRACH). The physical layer may for example perform modulation, forward error correction (FEC) coding, define a physical layer frame structure, etc., to transmit upper layer data at the physical channels. The physical channels may carry the transport channels. The physical layer may also carry signalling information, for example downlink control information (DCI). DCI may be carried for example on PDCCH. DCI may include information about uplink resource allocation and/or information about downlink transmissions targeted for UE 110. DCI may be used by gNB 120 for example to schedule an uplink grant for UE 110, i.e., to inform LTE 110 about transmission resources (e.g. subcarriers of particular orthogonal frequency division multiplexing (OFDM) symbols) assigned to UE 110 for uplink transmission. DCI may further indicate the transmission parameters to be used for the uplink grant.

Transmission resources of the physical layer may comprise time and/or frequency resources. An example of a frequency resource is a subcarrier of an orthogonal frequency division multiplexing (OFDM) symbol. An example of a time resource is the OFDM symbol. A resource element (RE) may for example comprise one subcarrier position during one OFDM symbol. A resource element may be configured to carry one modulation symbol, for example a quadrature amplitude modulation (QAM) symbol comprising a real and/or an imaginary part of the modulation symbol. Transmission resources may be assigned in blocks of resource elements. A resource block may comprise a group of resource elements (e.g. 12 REs). Modulation order may refer to the number of bits carried by one modulation symbol. A bandwidth part may comprise a set of subcarriers.

The protocol stack may therefore comprise the following layers (lowest to highest): physical layer, MAC layer, RLC layer, and PDCP layer. RRC and SDAP protocols may be configured to operate on top of the PDCP layer. The physical layer may be also referred to as Layer 1 (L1). The SDAP, PDCP, RLC, and MAC layers may be collectively referred to as Layer 2 (L2), including the mentioned protocols as sublayers of L2. Corresponding protocol stacks may be applied at UE 110 and gNBs 120, 122. Even though various operations have been described using the above protocol stack as an example, it is appreciated that the described example embodiments may be also applied to other protocol stacks having sufficiently similar functionality.

UE 110 may be in various RRC states with respect to the network. When UE 110 is powered up, it may be in a disconnected state or an idle state (e.g. RRC_IDLE). LTE 110 may move to a connected state (e.g. RRC_CONNECTED) for example through connection establishment to the network. If UE 110 is not active for a certain time, UE 110 may move from the connected state to an inactive state (e.g. RRC_INACTIVE).

In the idle state UE 110 may not be associated with an RRC context. From the network point of view there may not be a connection between RAN 120 and core network 134 for LTE 110. Therefore, in the idle state UE 110 may generally not communicate application data with the network. UE 110 may be also in a sleep-mode and only intermittently wake-up, for example for receiving paging messages. UE 110 may however perform cell re-selection and other idle state operations. In the connected state, UE 110 may be associated with an RRC context. In the connected state, UE 110 may communicate with the core network via the radio access network, for example gNB 120.

In the inactive state, UE 110 may stay registered to the network, but the connection to the radio access network may be suspended. However, the radio access network may store the UE context, which enables the connection to be quickly resumed. Connection to the core network may be maintained.

In the connected state, the UE 110 may perform radio resource management (RRM) measurements, for example in relation to a mobility (handover) procedure. LTE 110 may report its measurement results to the network (e.g. via gNB 120), for example periodically and/or in response to detecting a reporting triggering criterion to be fulfilled. Even though some example embodiments have been described using the RRC_IDLE, RRC_INACTIVE, or RRC_CONNECTED states of the 5G system as examples, it is appreciated the example embodiments may be applied to other type of idle, inactive, or connected states, for example having similar characteristics as the RRC _IDLE, RRC_INACTIVE, or the RRC_CONNECTED states. An RRC state may be also referred to as an RRC mode.

Transitioning to a radio resource control (RRC) connected state, as well as maintaining the RRC connection may result in unnecessary power consumption for a LTE that has only a small amount of data to be transmitted. Therefore, it may be desired to enable transmission of small amounts of data without transitioning to the RRC connected state. Such a procedure may be referred to as small data transmission (SDT) procedure. SDT may be implemented for example such that small amounts of data may be transmitted in idle or inactive states, for example based on an uplink grant received via a random access procedure or using a configured grant without performing a random access procedure.

SDT may enable UE 110 to transmit application data or signalling data in a non-connected state (e.g. , RRC_IDLE or RRC_INACTIVE). Hence, LTE 110 may transmit data without transitioning to a connected state (e.g., RRC_CONNECTED). SDT may be enabled on a radio bearer basis and it may be initiated by UE 110 for example when less than a certain configured amount of uplink data is to be transmitted across the radio bearers for which SDT is enabled. Further conditions for enabling SDT may include the downlink reference signal received power (RSRP) being above a configured threshold or valid SDT transmission resource(s) being available. A SDT failure detection timer may be configured to define a maximum duration which the SDT procedure is allowed to last until determining it to have failed.

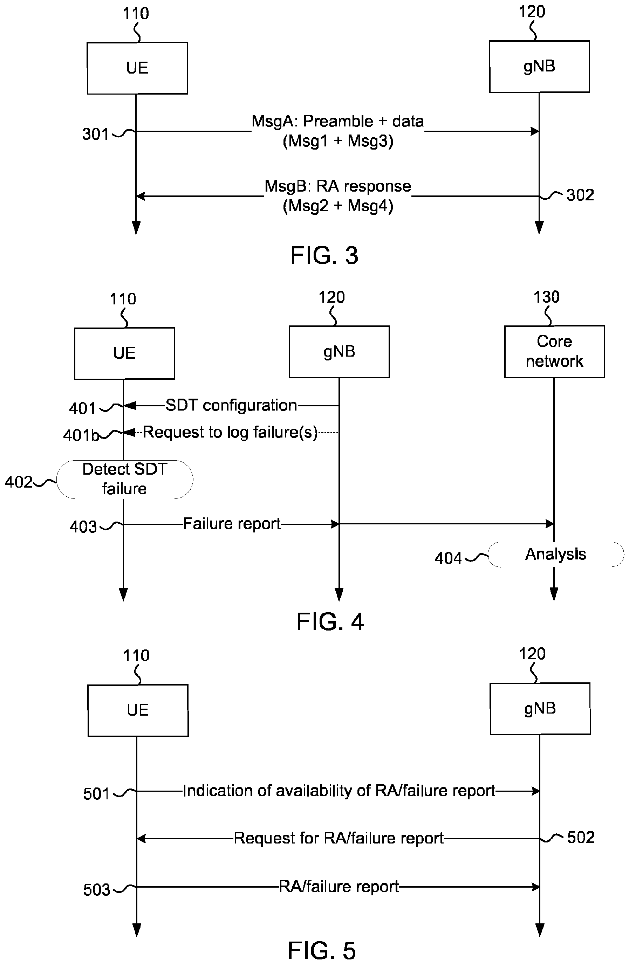

A SDT procedure may be initiated by UE 110 with a transmission over a random access channel (RACH) or over configured grant (CG) transmission resources. For RACH, the network may configure a four-step and/or two-step random access (RA) resources for SDT. Examples of the four-step and two-step RA processes are described with reference to FIG. 2 and FIG. 3, respectively. SDT may be unsuccessfully completed upon occurrence of, for example, cell re-selection, expiry of a SDT failure detection timer, a MAC entity reaching a configured maximum PRACH preamble transmission threshold, an RLC entity reaching a configured maximum retransmission threshold, and/or another type of occurrence.

FIG. 2 illustrates an example of a four-step random access procedure between UE 110 and gNB 120.

At operation 201, UE 110 may transmit a random access (RA) preamble. The RA preamble may comprise a first message (Msg1). Msg1 may be also called a random access request. The RA preamble may be transmitted on the physical random access channel (PRACH). The random access preamble may comprise at least one preamble sequence and a cyclic prefix. The cyclic prefix may be located before the preamble sequence(s) in transmission order. gNB 120 may receive the RA preamble. After transmission of the RA preamble the UE 110 may initiate monitoring for a RA response, for example on a physical downlink control channel (PDCCH).

At operation 202, gNB 120 may transmit a random access (RA) response. The RA response may comprise a second message (Msg2). The RA response may comprise an identifier of the RA preamble received by gNB 120 at operation 201. In response to receiving a RA response comprising the identifier of the RA preamble transmitted at operation 201, LTE 110 may determine the RA response to be successful and proceed to transmitting a scheduled uplink transmission. In response to not receiving a RA response, for example within a configured RA response window, or failing to verify the RA response, UE 110 may determine that the RA response has failed. In this case, LTE 110 may determine to try random access again or determine the RA procedure to have failed.

The RA response may indicate to LTE 110, which uplink resources it can use to perform its uplink transmission of following message(s) to gNB 120. The RA response may further comprise an indication of a network configured timing advance to be applied for adjusting the transmit timing of the UE 110, for example as a timing advance command (TAC). The network configured timing advance may be different from the (initial) timing advance used for pre-compensation when transmitting the RA preamble. The UE 110 may apply the network configured timing advance on top of the initial timing advance. For example, a timing advance applied for subsequent messages may comprise a sum of the initial timing advance and the network configured timing advance. This enables UE 110 to further adjust the timing for transmission of subsequent messages.

At operation 203, UE 110 may transmit a scheduled transmission. The scheduled (uplink) transmission may comprise a third message (Msg3) of the RA procedure. The scheduled transmission (Msg3) may comprise control information, for example a medium access control (MAC) control element (CE). Alternatively, or additionally, the scheduled transmission may comprise common control channel (CCCH) information, for example one or more CCCH service data units (SDU). The data carried by the scheduled transmission may hence comprise data submitted from a higher protocol layer. The data may be associated with the UE contention resolution identity, as part of the random access procedure. The scheduled transmission may in general comprise any information scheduled for transmission in the random access procedure after the RA preamble. The LTE 110 may initiate a contention resolution timer in response to transmission of the scheduled transmission. The scheduled transmission (Msg3) may be transmitted in response to receiving the RA response (Msg2).

At operation 204, gNB 120 may transmit a contention resolution message. The contention resolution may comprise a fourth message (Msg4). The contention resolution massage may be transmitted on the PDCCH or the physical downlink shared channel (PDSCH). UE 110 may determine the contention resolution to be successful, in response to receiving a contention resolution message addressed to LTE 110, for example by a particular value of the cell radio network temporary identifier (C-RNTI).

FIG. 3 illustrates an example of a two-step random access procedure.

At operation 301, UE 110 may transmit a random access preamble and data, for example a physical uplink shared channel (PUSCH) transmission. These messages may be transmitted together (e.g. one after another) and the combination of these messages may be referred to as MsgA. Therefore, MsgA may comprise a first element, Msg1 (= MsgA preamble), and a second element, Msg3 (= MsgA PUSCH). MsgA preamble may comprise a RA preamble similar to operation 201. MsgA PUSCH may comprise information content similar to the scheduled transmission of operation 203. The gNB 120 may receive the RA preamble and the data (PUSCH). Operation 301 may therefore comprise consecutive transmission of the RA preamble and the scheduled transmission. For example, the scheduled transmission may be transmitted before reception of the RA response (response to the RA preamble) from gNB 120. Accordingly, UE 110 may transmit the scheduled transmission without receiving a response to the RA preamble before the scheduled transmission. It is however noted that there may be a time gap between transmission of the RA preamble and the scheduled transmission. The RA preamble and the scheduled transmission may be also transmitted on different channels (e.g. PRACH and PUSCH).

At operation 302, gNB 120 may transmit a RA response and a contention resolution message. These messages may be transmitted together (e.g. one after another) and the combination of these messages may be referred to as MsgB. MsgB may therefore comprise a first element, Msg3 similar to the RA response of operation 202, and a second element, Msg4 similar to the contention resolution of operation 204. Operation 302 may therefore comprise consecutive transmission of the RA response and the contention resolution messages. UE 110 may receive the RA response and the contention resolution message.

FIG. 4 illustrates example of detecting and reporting a small data transmission (SDT) failure. UE 110 may be configured to communicate with gNB 120 in accordance with a SDT procedure.

At operation 401, gNB 120 may transmit a SDT configuration to UE 110. The SDT configuration may include various parameter affecting execution of the SDT procedure at UE 110. LTE 110 may configure its SDT functionality based on the received SDT configuration. In some embodiments, the SDT configuration may include a configuration configuring LTE 110 to begin collecting or logging information related to a failure associated with the SDT procedure. The SDT configuration may therefore comprise a request for collecting or logging information related to the failure. In some embodiments, gNB 120 may transmit and UE 110 may receive such a request or configuration in a separate configuration, e.g., as part of a separate message or operation, as shown in operation 401b. Alternatively, UE 110 may be pre-configured to collect or log the information related to the failure.

At operation 402, UE 110 may detect occurrence of a failure associated with the SDT procedure. Note that the failure may occur any time during the SDT procedure, for example before any actual SDT data is transmitted. UE 110 may be configured to detect the failure for example when (e.g., in response to) detecting one or more of the following: a cell re-selection procedure to be initiated during the SDT procedure, a failure detection timer associated with the SDT procedure to expire, a MAC control entity to reach a configured maximum number of RA transmissions, or a RLC entity to reach a configured maximum number of retransmissions. UE 110 may be configured to transmit an indication of the reason for the failure (e.g., any of the abovementioned reasons) to gNB 120, for example as part of a failure report (see operation 403).. For example, a failure may be detected if UE 110 performs a cell re-selection from cell 130 to cell 132 and SDT transmission is ongoing, or at least the SDT procedure has been initiated. Cell re-selection may include switching a cell while being in a non-connected state with respect to communication network 100. This may cause the SDT procedure to fail.

Furthermore, as described above, UE 110 may be configured with an SDT failure detection timer (e.g., timer t319a). When this timer expires, UE 110 may determine that the SDT procedure has failed. UE 110 may be further configured with a maximum number of RA preamble transmissions and/or a maximum number of retransmissions for an RLC entity. If either of these limits is reached, UE 110 may determine the SDT transmission to have failed.

UE 110 may collect or log the indication associated with the occurrence of the failure, e.g., the reason for the failure, or its configuration or circumstances during the occurrence of the failure. For example, UE 110 may store the indication, or the information associated with the indication, at its memory. This enables the indication to be stored before transmitting it to the network. Transmission of the indication may be triggered for example based on receiving a request for the failure report, as will be further described with reference to operation 502. Alternatively, the failure report including the indication may be transmitted (immediately) in response to detecting the failure. Failure reporting may be therefore provided via immediate MDT or logged MDT.

At operation 403, UE 110 may transmit a failure report to gNB 120, which may forward the failure report, or at least part of its content, to core network 134. A network analysis function of core network 134 may receive the failure report, or its relevant content, and determine a cause for the failure. The failure report may comprise an indication of at least one of the following: a reason for the failure, information relating to the configuration for the small data transmission procedure during occurrence of the failure, or one or more circumstances during occurrence of the failure. The failure report may be transmitted as a RA report, as will be further described with reference to FIG. 5.

The reason for the failure may indicate, from the point of view of UE 110, why the SDT procedure failed, e.g., due to initiation of cell re-selection before completing the SDT procedure, expiry of the SDT failure detection timer, or reaching the configured maximum number of preamble transmissions and/or retransmissions before completing the SDT procedure.

The configuration of LTE 110 during occurrence of the failure may comprise various parameters, e.g., SDT configuration parameters, configured at LTE 110. The configuration of UE 110 may for example comprise an identifier of a cell associated with the SDT procedure, e.g., a cell configured to receive the SDT data or a cell where the failure occurred. The configuration of UE 110 may comprise at least part of the SDT configuration, or at least part of a random access configuration applicable for the SDT procedure. The SDT configuration may comprise a RSRP threshold (e.g., *sdt-RSRP-Threshold*)*,* a data volume threshold (e.g., *sdt-Data Volume Threshold*)*,* a value of a logical channel scheduling request (SR) delay timer (e.g., *sdt-LogicalChannelSR-DelayTimer*)*,* a value of the SDT failure detection timer (e.g., *t319a*), or a search space for monitoring PDCCH channel (e.g., *sdt-SearchSpace*)*.*

A random access configuration may indicate a type of random access procedure, for example a two-step or four step random access procedure. The random access configuration may further include one or more of the following parameters:
- *absoluteFrequencyPointA*: This field may indicate the absolute frequency position of the reference resource block (Common RB 0).
- *locationAndBandwidth:* Frequency domain location and bandwidth of the bandwidth part (BWP) associated to the random-access resources used by the UE.
- *perRAInfoList, perRAInfoList-v1660*: This field may provide information about each of the random access attempts in the chronological order of the random access attempts. If *perRAInfoList-v1660* is present, it may contain the same number of entries, listed in the same order as in *perRAInfoList-r16.*
- *subcarrierSpacing:* Subcarrier spacing used in the BWP associated to the random-access resources used by the UE.
- *cellID*: This field may indicate an identifier (e.g., cell global identifier, CGI) of the cell in which the associated random access procedure was performed.
- *contentionDetected:* This field may be used to indicate whether contention was detected for the transmitted preamble in the given random access attempt or not. This field may not be included when LTE 110 performs random access attempt and is using contention free random-access resources or when a field indicating the purpose of the RA (e.g., *raPurpose)* is set to *requestForOtherSI* or when the RA attempt is a 2-step RA attempt and fallback to 4-step RA did not occur (i.e. *fallbackToFourStepRA* is not included).
- *csi-RS-Index, csi RS-Index-v1660*: This field may be used to indicate the CSI-RS (channel state information reference signal) index corresponding to the random access attempt. If the random access procedure is for beam failure recovery, the field may indicate the *NZP-CSI-RS-Resourceld.* For CSI-RS index larger than *maxNrofCSI-RS-ResourcesRRM-1,* the index value is the sum *of csi-RS Index* (without suffix) and csi-RS-Index-v1660.
- *dlPathlossRSRP:* Measeured RSRP of the downlink pathloss reference obtained at the time of RA type selection stage of the RA procedure
- *dlRSRPAboveThreshold*: In 4-step random access procedure, this field may be used to indicate whether the downlink beam (synchronization signal block, SSB) quality associated to the random access attempt was above or below a threshold (*rsrp-ThresholdSSB*) in *beamFailureRecoveryConfig* in LTL BWP configuration of LTL BWP selected for random access procedure initiated for beam failure recovery; Otherwise, this field may indicate *rsrp-ThresholdSSB* in *rach-ConfigCommon* in LTL BWP configuration of UL BWP selected for random access procedure. In 2 step random access procedure, this field may be used to indicate whether the downlink beam (SSB) quality associated to the random access attempt was above or below a threshold (*msgA-RSRP-ThresholdSSB*) in *rach-ConfigCommonTwoStepRA* in UL BWP configuration of UL BWP selected for random access procedure.
- *fallbackToFourStepRA*: This field may indicate if a fallback indication in MsgB is received for the 2-step random access attempt.
- *intendedSIBs:This* field may indicate the SIB(s) which UE 110 wanted to receive as a result of the on demand system information (SI) request (when the RA procedure is a used as a SI request) initiated by UE 110. This field may indicate the one(s) of the SIB(s) in the SI message(s) requested to be broadcast that UE 110 was interested in.
- *msg1-SCS-From-prach-ConfigurationIndex*: This field may be set by UE 110 with the corresponding subcarrier spacing (SCS) for contention based random access (CBRA) as derived from the *prach-Configurationlndex* in *RACH-ConfigGeneric* when the *msg1-SubcarrierSpacing* is absent; otherwise, this field may be absent.
- *msg1-SCS-From-prach-ConfigurationIndexCFRA*: This field may be set by UE 110 with the corresponding SCS for CFRA as derived from the *prach-Configurationlndex* in *RACH-ConfigGeneric* when the *msg1-SubcarrierSpacing* is absent; otherwise, this field may be absent.
- *msgA-PUSCH-PayloadSize*: This field may indicate the size of the overall payload available in the buffer of UE 110 at the time of initiating the 2-step RA procedure.
- *msgA-RO-FDM*: This field may indicate the number of msgA PRACH transmission occasions frequency-division multiplexed in one time instance for the PRACH resources configured for 2-step CBRA.
- *msgA-RO-FDMCFRA*: This field may indicate the number of msgA PRACH transmission occasions Frequency-Division Multiplexed in one time instance for the PRACH resources configured for 2-step CFRA.
- *msgA-RO-FrequencyStart:* This field may indicate the lowest resource block of the contention based random-access resources for 2-step CBRA in the random-access procedure. The indication may be provided in the form of the offset of the lowest PRACH transmissions occasion with respect to a reference physical resource block (PRB) (e.g., PRB 0) in the frequency domain.
- *msgA-RO-FrequencyStartCFRA:* This field may indicate the lowest resource block of the contention free random-access resources for the 2-step CFRA in the random-access procedure. The indication may be provided in the form of the offset of the lowest PRACH transmissions occasion with respect to a reference PRB (e.g., PRB 0) in the frequency domain.
- *msgA-SCS-From-prach-ConfigurationIndex:* This field may be set by UE 110 with the corresponding SCS as derived from the *msgA-PRACH-ConfigurationIndex* in *RACH-ConfigGenericTwoStepRA* when the *msgA-SubcarrierSpacing* is absent and when only 2-step random-access resources are available in the UL BWP used in the random-access procedure; otherwise, this field may be absent.
- *numberOfPreamblesSentOnCSI-RS*: This field may indicate the total number of successive RA preambles that were transmitted on the corresponding CSI-RS.
- *numberOfPreamblesSentOnSSB:* This field may indicate the total number of successive RA preambles that were transmitted on the corresponding SS/PBCH block.
- *onDemandSISuccess:* This field may be set to true when the RA report entry is included because of either msg1 based on demand SI request or msg3 based on demand SI request and if the on-demand SI request is successful. Otherwise, the field may be absent.
- *perRAAttemptInfoList*: This field may include information about a random access attempt.
- *perRACSI-RSInfoList*: This field may include information about the successive random access attempts associated to the same CSI-RS.
- *perRASSBInfoList*: This field may include detailed information about the successive random access attempts associated to the same SS/PBCH (synchronization signal/physical broadcast channel) block.
- *ra-InformationCommon*: This field may include information on random access attempts.
- *raPurpose*: This field may indicate the RA scenario for which the RA report entry is triggered, for example RA accesses associated to initial access from RRC _IDLE, RRC reestablishment procedure, transition from RRC-INACTIVE, or SDT. The indicator *beamFailureRecovery* may be used in case of successful beam failure recovery related RA procedure in the SpCell (secondary group primary cell). The indicator *reconfigurationWithSync* may be used if UE 110 executes a reconfiguration with synchronization. The indicator *ulUnSynchronized* may be used if the random access procedure is initiated in a SpCell by downlink or uplink data arrival during RRC_CONNECTED state when the *timeAlignmentTimer* is not running in the primary timing advance group (PTAG) or if the RA procedure is initiated in a serving cell by a PDCCH order. The indicator *scheduling Request Failure* may be used in case of scheduling request (SR) failures. The indicator *noPUCCHResourceAvailable* may be used when UE 110 has no valid SR PUCCH resources configured. The indicator *requestForOtherSI* may be used for MSG1 based on demand SI request. The indicator *msg3RequestForOtherSI* may be used in case of MSG3 based SIrequest. This field can also be used for the secondary cell group (SCG) related RA report when the *raPurpose* is set to *beamFailureRecovery, reconfigurationWithSync, ulUnSynchronized, schedulingRequestFailure,* and/or *noPUCCHResourceAvailable.*
- *spCellID:* This field may indicate the CGI of the SpCell of the cell group associated to the secondary cell (SCell) in which the associated random access procedure was performed. If UE 110 performs RA procedure on a SCell associated to the master cell group (MCG), then this field may be set by UE 110 to the CGI of the PCell and if UE 100 performs RA procedure on a SCell associated to the SCG, then this field may be set to the CGI of the PSCell. If the CGI of the PSCell is not available at UE 110 for the RA procedure performed on a SCell associated to the SCG or for the RA procedure on the PSCell, this field may be set to the CGI of the PCell. Otherwise, the field is absent.
- *ssb-Index:* This field may indicate the SS/PBCH index of the SS/PBCH block corresponding to the random access attempt.
- *ssbsForSl Acquisition:* This field may indicate the SSB(s) (in the form of SSB index(es)) that UE 110 used to receive the requested SI message(s). The field may be present if the purpose of the random access procedure were to request on-demand SI (i.e. if the *raPurpose* is set to *requestForOtherSI* or *msg3RequestForOtherSI*). Otherwise, the field may be absent.

The circumstances during occurrence of the failure may comprise any parameters or procedures configured or ongoing at UE 110 when detecting the occurrence of the failure. Examples of such circumstances include the type of random access procedure (e.g., two-step or four-step RA procedure), during which the occurrence of the failure was detected. Accordingly, the failure report may include information relating to the RA procedure (e.g., its type) used during occurrence of the failure.

UE 110 may also transmit to gNB 120 an indication of SDT as the purpose for its random access. This indication may be included in the failure report or transmitted separately to gNB 120.

At operation 404, core network 134 may analyse the failure report. Core network 134 may determine a cause for the failure based on the failure report. Core network 134 may determine the cause for the failure based on the information of the failure report. Core network 130 may then determine and cause corrective actions, if possible. For example, if the failure happened due to cell re-selection, the network may no be able to do anything for it, because the failure may occur due to the natural reason that UE 110 moves and re-selection happens, which leads to the failure. If the failure happens due to expiry of the failure detection timer, core network 134 may adjust (e.g., increase) the timer value. If the failure happens due to a counter (e.g., number of RA preambles) reaching a maximum value, core network may adjust (e.g., increase) the counter. If the failure happens due to radio link control entity reaching a configured maximum number of retransmissions, the problem may be related to radio conditions when SDT was performed. Based on this, core network 134 may adjust RSRP threshold(s) for SDT initiation. It is noted that wherever applicable, the analysis and/or the corrective actions may be performed by gNB 120. Alternatively, at least part of the content of the failure report may be output (e.g., on a display) for analysis by a human user.

FIG. 5 illustrates example of configuring and providing a random access (RA) report. As discussed above, the failure report may comprise (e.g., be transmitted as) a random access (RA) report (RACH report). UE 110 may be configured to transmit a RA report, for example in order to enable RACH optimization to be performed by the network. The RA report may include, e.g., in addition to the failure report, contain an indication that a collision was detected when attempting the random access earlier. The RA report may for example include an indication of the number of RA preamble transmissions until successful random access. Even tough operations of FIG. 5 are described with reference to a RA report, the same functionality is also applicable to indicating availability of, requesting, and/or transmitting a failure report regardless of whether the failure is provided as, or within, a RA report.

At operation 501, LTE 110 may transmit an indication of availability of the RA report to gNB 120. This enables to inform gNB 120 that a RA report is available at LTE 110 for transmission to gNB 120. Unnecessary requests for the RA report may be therefore avoided. In general, UE 110 may transmit an indication of availability of the failure report, which, for example, may be included in the RA report.

At operation 502, gNB 120 may transmit to UE 110 a request for the RA report. The gNB 120 may specifically request UE 110 to report a SDT RA report. In one example request may be transmitted using the *UEInformationRequest* RRC message. The gNB 120 may transmit the request in response to receiving the indication of availability of the request from LTE 110. It is however also possible to transmit the request without receiving the indication of availability of the RA report.

At operation 503, UE 110 may transmit the RA report to gNB 120. This may be in response to receiving the request for the RA report from gNB 120 at operation 502. In one example, the RA report transmitted using the *UEInformationResponse* RRC message. LTE 110 may also transmit the RA report without receiving the request from gNB 120. The RA report of operation 503 may be the failure report of operation 403. The RA report may include the SDT data (e.g., user data or application data), SDT configuration, or SDT failure related information, such as for example the reason for the failure, the configuration of LTE 110 during occurrence of the failure, or the circumstances during occurrence of the failure, as described above.

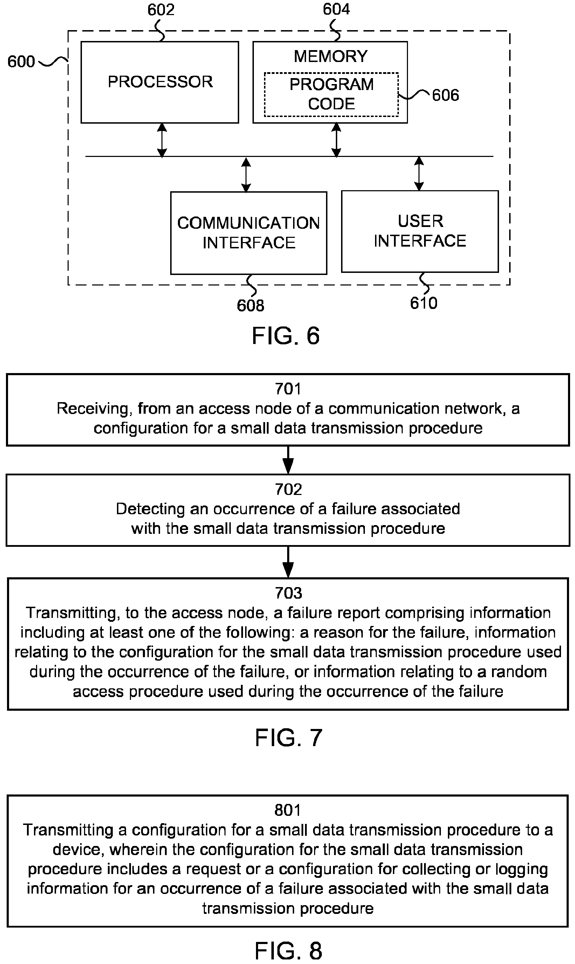

FIG. 6 illustrates an example embodiment of an apparatus 600, for example UE 110, gNB 120, 122, or network device of core network 134, a component or a chipset of LTE 110, gNB 120, or the network device. Apparatus 600 may comprise at least one processor 602. The at least one processor 602 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 600 may further comprise at least one memory 604. The at least one memory 604 may be configured to store, for example, computer program code or the like, for example operating system software and application software. The at least one memory 604 may comprise one or more volatile memory devices, one or more non-volatile memory devices, and/or a combination thereof. For example, the at least one memory 604 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 600 may further comprise a communication interface 608 configured to enable apparatus 600 to transmit and/or receive information to/from other devices. In one example, apparatus 600 may use communication interface 608 to transmit or receive signaling information and/or data in accordance with at least one cellular (e.g. non-terrestrial) communication protocol and/or one or more GNSS protocols. The communication interface may be configured to provide at least one wireless radio connection, such as for example a 3GPP mobile broadband connection (e.g. 3G, 4G, 5G, 6G). However, the communication interface may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 608 may comprise, or be configured to be coupled to, an antenna or a plurality of antennas to transmit and/or receive radio frequency signals. One or more of the various types of connections may be also implemented as separate communication interfaces, which may be coupled or configured to be coupled to an antenna or a plurality of antennas.

Apparatus 600 may further comprise a user interface 610 comprising an input device and/or an output device. The input device may take various forms such a keyboard, a touch screen, or one or more embedded control buttons. The output device may for example comprise a display, a speaker, a vibration motor, or the like.

When apparatus 600 is configured to implement some functionality, some component and/or components of apparatus 600, such as for example the at least one processor 602 and/or the at least one memory 604, may be configured to implement this functionality. Furthermore, when the at least one processor 602 is configured to implement some functionality, this functionality may be implemented using the program code 606 comprised, for example, in the at least one memory 604.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

Apparatus 600 may in general comprise means for performing one or more of the example embodiments described herein. In one example, the means comprises the at least one processor 602, the at least one memory 604 including program code 606 configured to, when executed by the at least one processor, cause the apparatus 600 to perform the method. The operations described may be carried out by computer program instructions running on means, for example the at least one processor 602 and the at least one memory 604, which may provide generic data processing functions. Such means may be embedded for example in a smartphone, access node, satellite, vehicle, or the like. The means may comprise radio transmitting and/or receiving means , for example antenna(s), baseband circuitry, and/or radio frequency circuitry, or the means may carry out data processing functions and be, or be configured to be, coupled to an external radio head, or the like, for transmission and reception of radio frequency signals.

Apparatus 600 may comprise a computing device such as for example an access node, a server, a mobile phone, a tablet computer, a laptop, an internet of things (IoT) device, or the like. Examples of IoT devices include, but are not limited to, consumer electronics, wearables, sensors, and smart home appliances. In one example, apparatus 600 may comprise a vehicle such as for example a car. Although apparatus 600 is illustrated as a single device it is appreciated that, wherever applicable, functions of apparatus 600 may be distributed to a plurality of devices, for example to implement example embodiments as a cloud computing service.

Apparatus 600 may be configured to perform or cause performance of any aspect of the method(s) described herein. Further, computer program 606 or a computer program product may comprise instructions for causing, when executed, apparatus 600 to perform any aspect of the method(s) described herein. Further, apparatus 600 may comprise means for performing any aspect of the method(s) described herein. The means may comprise at least one processor 602 and at least one memory 604 including computer program code 206, the at least one memory 604 and program code 606 configured to, with the at least one processor 602, cause performance any aspect of the method(s) by apparatus 600. The method(s) may be thus computer-implemented, for example based algorithm(s) executable by generic processing functions, an example of which is the at least one processor 602. Program code 606 is provided as an example of instructions that, when executed by the at least one processor 602, cause apparatus 600 to perform any aspect of the method(s) described herein.

FIG. 7 illustrates an example of a method for failure reporting.

At 701, the method may comprise receiving, from an access node of a communication network, a configuration for a small data transmission procedure.

At 702, the method may comprise detecting an occurrence of a failure associated with the small data transmission procedure.

At 703, the method may comprise transmitting, to the access node, a failure report comprising information including at least one of the following: a reason for the failure, information relating to the configuration for the small data transmission procedure used during the occurrence of the failure, or information relating to a random access procedure used during the occurrence of the failure.

FIG. 8 an example of a method for configuring failure reporting.

At 801, the method may comprise transmitting a configuration for a small data transmission procedure to a device, wherein the configuration for the small data transmission procedure includes a request or a configuration for collecting or logging information for an occurrence of a failure associated with the small data transmission procedure.

Further features of the methods directly result from the functionalities and parameters of the UE 110, gNB 120, gNB 122, or in general the apparatus 600, as described in the appended claims and throughout the specification, and are therefore not repeated here. Different variations of the methods may be also applied, as described in connection with the various example embodiments. The method may be computer-implemented.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (i.e., tangible, not a signal) as opposed to a limitation on data storage persistency (e.g., RAM vs. ROM).

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for receiving, from an access node of a communication network, a configuration for a small data transmission procedure;
means for detecting an occurrence of a failure associated with the small data transmission procedure; and
means for transmitting, to the access node, a failure report comprising information including at least one of the following: a reason for the failure, information relating to the configuration for the small data transmission procedure used during the occurrence of the failure, or information relating to a random access procedure used during the occurrence of the failure.

2. The apparatus according to claim 1, wherein the means for detecting the occurrence of the failure is configured to determine the occurrence of the failure when a cell re-selection procedure is initiated during the small data transmission procedure,
a failure detection timer associated with the small data transmission procedure expires,
a medium access control entity reaches a configured maximum number of random access preamble transmissions, or
a radio link control entity reaches a configured maximum number of retransmissions.

3. The apparatus according to any of claims 1 to 2, wherein the configuration for the small data transmission procedure further includes a request or a configuration for collecting or logging the information for the failure report.

4. The apparatus according to any of claims 1 to 3, further comprising means for receiving, from the access node, a request for the failure report.

5. The apparatus according to any of claims 1 to 4, further comprising means for collecting or logging the information for the failure report associated with the occurrence of the failure.

6. The apparatus according to any of claims 1 to 5, further comprising:
means for logging and transmitting, to the access node, an indication of a purpose for random access, an identifier of a cell associated with the small data transmission procedure, at least part of the configuration of the small data transmission procedure, or at least part of a random access configuration applicable for the small data transmission procedure.

7. The apparatus according to any of claims 1 to 6, wherein the information relating to the random access procedure used during the occurrence of the failure comprise at least one of the following:
an indication that the occurrence of the failure occurred during a two-step random access procedure, or
an indication that the occurrence of the failure during a four-step random-access procedure.

8. The apparatus according to any of claims 1 to 7, wherein the failure report comprises a random access report.

9. The apparatus according to any of claims 1 to 8, further comprising:
means for transmitting, to the access node, an indication of availability of the random access report or the failure report.

10. The apparatus according to any of claims 1 to 9, wherein the failure report is configured to be delivered to a network analysis function of the communication network for determining a cause for the failure.

11. The apparatus according to any of claims 1 to 10, wherein small data transmission procedure comprises 3GPP small data transmission (SDT) procedure.

12. An apparatus comprising:
means for transmitting a configuration for a small data transmission procedure to a device, wherein the configuration for the small data transmission procedure includes a request or a configuration for collecting or logging information for an occurrence of a failure associated with the small data transmission procedure.

13. The apparatus according to claim 12, further comprising:
means for transmitting, to the device, a request for a failure report associated with the small data transmission procedure.

14. A method, comprising:
receiving, from an access node of a communication network, a configuration for a small data transmission procedure;
detecting an occurrence of a failure associated with the small data transmission procedure; and
transmitting, to the access node, a failure report comprising information including at least one of the following: a reason for the failure, information relating to the configuration for the small data transmission procedure used during the occurrence of the failure, or information relating to a random access procedure used during the occurrence of the failure.

15. A method comprising:
transmitting a configuration for a small data transmission procedure to a device, wherein the configuration for the small data transmission procedure includes a request or a configuration for collecting or logging information for an occurrence of a failure associated with the small data transmission procedure.
